# EUROPEAN PATENT APPLICATION

(11) **EP 4 851 472 A1**
(43) Date of publication of application: **09.12.2026**
(21) Application number: 24955206.8
(22) Date of filing: 10.12.2024
(51) Int. Cl.: F16C 33/14, C23C 8/32, C23C 8/56, C21D 1/18, C21D 9/40

(54) **METHOD FOR MANUFACTURING HIGH-STRENGTH WEAR-RESISTANT BEARING**

(30) Priority: 30.09.2024 CN 202411378950
(71) Applicant: YANTAI DONGXING GROUP CO., LTD, Shandong 264006 (CN)
(72) Inventor: YU, Dawei, Yantai, Shandong 264006 (CN); LU, Qinghui, Yantai, Shandong 264006 (CN); ZUO, Zhiyuan, Yantai, Shandong 264006 (CN); WANG, Zhijie, Yantai, Shandong 264006 (CN)
(74) Representative: Bayramoglu et al.
(86) International application number: PCT/CN2024/137975
(87) International publication number: WO 2026/065761

(57) **Abstract**

The present disclosure relates to the field of alloy steel materials, and in particular to a fabrication method of a high-strength wear-resistant bearing. A controlled medium treatment to form a composite microstructure is incorporated into the fabrication method. Through metal material modification techniques within controlled media, a composite microstructure is formed in the matrix of the product. The composite microstructure, through gradient distribution, provides the product with high core strength, strong impact resistance, high surface hardness, and excellent wear resistance. The high-strength wear-resistant bearing has a service life of 500 h under low-speed, heavy-load operating conditions and a friction coefficient of 0.05 or less throughout the life cycle. The service life of 500 h under operating conditions significantly reduces the replacement frequency of the bearing and the production downtime loss of equipment. The friction coefficient of 0.05 or less throughout the life cycle greatly reduces the wear degree on a friction pair in the shaft-hole fit, alleviates the intensity of sliding friction, and extends the service life of both the bearing and a mating shaft.

## Description

### TECHNICAL FIELD

The present disclosure relates to the field of alloy steel materials, and in particular to a fabrication method of a high-strength wear-resistant bearing.

### BACKGROUND TECHNOLOGY

Bearings are indispensable components in modem mechanical equipment. The main functions of bearings are to support mechanical rotating bodies, reduce the friction coefficient during movement, and ensure the rotational accuracy. During operation, bearings are highly susceptible to surface wear due to factors such as prolonged exposure to cyclic loads, inadequate lubrication, or harsh working conditions. Such surface wear leads to dimensional changes, affects the service life of bearings, and increases the maintenance cost of equipment. Therefore, it is necessary to enhance the strength and wear resistance of a bearing, thereby extending the service life of the bearing.

Existing bearings are generally manufactured by conventional heat treatment processes. Chinese invention patent No. CN113430462B discloses a high-strength corrosion-resistant low-carbon alloy steel and a fabrication method thereof. By regulating chemical elements and mass percentages thereof in raw materials and strictly controlling quenching, tempering, and cooling processes, this patent enhances the strength and corrosion resistance of the low-carbon alloy steel. However, these heat treatment processes present issues such as significant fluctuations in matrix hardness, uneven surface hardness, and soft spots, which lead to poor wear resistance and a short service life of the product and also affect the service life of a shaft mating accordingly.

### CONTENT OF THE INVENTION

Technical objective: In order to overcome the deficiencies in the prior art, the present disclosure provides a fabrication method of a high-strength wear-resistant bearing, which exhibits high core strength, strong impact resistance, high surface hardness, and excellent wear resistance.

Technical solution: To achieve the above objective, the present disclosure provides a fabrication method of a high-strength wear-resistant bearing, including the following steps:
S1, fabrication of blanks with a raw material: designing products of different specifications according to a shape and a structure of a sliding bearing, and cutting or forging according to lengths of the products to produce the blanks, where the raw material is a low-carbon alloy steel;
S2, pre-hardening machining: pretreating the blanks, and adjusting shapes of the blanks according to dimensions of the sliding bearing, such that all dimensions other than an outer diameter and an inner diameter are machined to a finished state and the outer diameter and the inner diameter are machined to a semi-finished state;
S3, heat treatment: subjecting products obtained in the S2 to quenching at 850°C to 950°C and tempering at 650°C to 950°C to allow 100% sorbite (S) structure on a surface and a grain size grade of 5 or more;
S4, finish machining: conducting finish grinding in terms of the outer diameter and the inner diameter according to design requirements of the sliding bearing to achieve finished dimensions, so as to produce preliminary bearings; and
S5, treating with controlled media to form a composite microstructure, where the controlled media include a gaseous medium and a liquid medium, the gaseous medium includes CO, H₂, and N₂, and the liquid medium includes K₂CO₃, Na₂CO₃, NaCNO, Pr, and Nd.

Further, the gaseous medium includes 15% to 20% of the CO, 40% to 45% of the H₂, and 35% to 45% of the N₂; and the liquid medium includes 30% to 40% of the K₂CO₃, 42% to 50% of the Na₂CO₃, 17% to 28% of the NaCNO, a trace amount of the Pr, and a trace amount of the Nd.

Further, the gaseous medium includes 18% of the CO, 42% of the H₂, and 40% of the N₂; and the liquid medium includes 32% of the K₂CO₃, 48% of the Na₂CO₃, 19% of the NaCNO, a trace amount of the Pr, and a trace amount of the Nd.

Further, treating with controlled media to form the composite microstructure includes the following steps:
S51, treatment with the gaseous medium: placing the preliminary bearings in the gaseous medium, controlling a temperature at 800°C to 900°C, and conducting heat preservation for 10 h to 20 h; and
S52, treatment with the liquid medium: placing preliminary bearings treated with the gaseous medium in the liquid medium, controlling a temperature at 500°C to 600°C, and conducting heat preservation for 2 h to 4 h,
where a composite microstructure composition of the high-strength wear-resistant bearing is S + C + Fe₂N + Fe₃N + Fe₄N.

Further, in the S51, the temperature is 830°C to 850°C and the heat preservation is conducted for 15 h; and in the S52, the temperature is 545°C to 560°C and the heat preservation is conducted for 3 h.

Further, the low-carbon alloy steel includes the following components in mass percentages: 0.17% to 0.23% of C, 0.15% to 0.37% of Si, 0.55% to 0.95% of Mn, 0.035% or less of S, 0.035 or less of P, 0.30% to 0.70% of Cr, 0.45% to 0.80% of Ni, 0.03% or less of Cu, 0.15% to 0.30% of Mo, 0.04% to 0.10% of Ti, and a balance of Fe and unavoidable impurities.

The fabrication method of the high-strength wear-resistant bearing in the present disclosure has at least the following technical effects:
A controlled medium treatment to form a composite microstructure is incorporated into the fabrication method of the present disclosure. Through metal material modification techniques within controlled media, a composite microstructure is formed in the matrix of the product. The composite microstructure, through gradient distribution, provides the product with high core strength, strong impact resistance, high surface hardness, and excellent wear resistance. The high-strength wear-resistant bearing has a service life of 500 h under low-speed, heavy-load bench test conditions specified in GB/T23894 and a friction coefficient of 0.05 or less throughout the life cycle. The service life of 500 h under the bench test conditions significantly reduces the replacement frequency of the bearing and the production downtime loss of equipment. The friction coefficient of 0.05 or less throughout the life cycle greatly reduces the wear degree on a friction pair in the shaft-hole fit, alleviates the intensity of sliding friction, and extends the service life of both the bearing and a mating shaft.

### DESCRIPTION OF THE DRAWINGS

FIG. 1 is an image of a microstructure of a high-strength wear-resistant bearing at a magnification of 500×; and
FIG. 2 shows the comparison of friction coefficients of high-strength wear-resistant bearings produced by different processes.

### SPECIFIC IMPLEMENTATIONS

The principles and features of the present disclosure are described below with reference to the accompanying drawings. The listed embodiments are only used to explain the present disclosure, rather than to limit the scope of the present disclosure.

Example 1: A fabrication method of a high-strength wear-resistant bearing is provided. A raw material used for the fabrication method is a low-carbon alloy steel. The low-carbon alloy steel includes the following components in mass percentages: 0.20% of C, 0.3% of Si, 0.70% of Mn, 0.030% of S, 0.030% of P, 0.50% of Cr, 0.55% of Ni, 0.02% of Cu, 0.20% of Mo, 0.07% of Ti, and a balance of Fe and unavoidable impurities. The fabrication method includes the following steps:
S1: Fabrication of blanks with the raw material: Products of different specifications were designed according to a shape and a structure of a sliding bearing. Cutting or forging was conducted according to lengths of the products to produce the blanks.
S2: Pre-hardening machining: The blanks were pretreated, and shapes of the blanks were adjusted according to dimensions of the sliding bearing, such that all dimensions other than an outer diameter and an inner diameter were machined to a finished state and the outer diameter and the inner diameter were machined to a semi-finished state.
S3: Heat treatment: Products obtained in the S2 were subjected to quenching at 850°C to 950°C and tempering at 650°C to 950°C to allow 100% sorbite (S) structure on a surface and a grain size grade of 5 or more.
S4: Finish machining: Finish grinding was conducted in terms of the outer diameter and the inner diameter according to design requirements of the sliding bearing to achieve finished dimensions, so as to produce preliminary bearings.

Examples 2 to 5: With reference to the low-carbon alloy steel composition and heat treatment method in Example 1, the preliminary bearings were treated as follows:
S5: A treatment was conducted with controlled media to form a composite microstructure. The controlled media included a gaseous medium and a liquid medium. The gaseous medium included CO, H₂, and N₂. The liquid medium included K₂CO₃, Na₂CO₃, NaCNO, a trace amount of Pr, and a trace amount of Nd. The gaseous medium and the liquid medium were adjusted to provide a plurality of examples. Specific parameters for each example were shown in Table 1.

**Table 1 Test parameters for Examples 2 to 5**

| Controlled media | Component | Example 2 | Example 3 | Example 4 | Example 5 |
|---|---|---|---|---|---|
| Gaseous medium | CO | 15% | 20% | 20% | 18% |
| | H₂ | 40% | 40% | 45% | 42% |
| | N₂ | 45% | 40% | 35% | 40% |
| Liquid medium | K₂CO | 30% | 40% | 32% | 32% |
| | Na₂CO₃ | 42% | 42% | 50% | 48% |
| | NaCNO | 27% | 18% | 17% | 19% |
| | Pr | Trace amount | Trace amount | Trace amount | Trace amount |
| | Nd | Trace amount | Trace amount | Trace amount | Trace amount |

According to the parameters for each example, the preliminary bearings were treated as follows:
S51: Treatment with the gaseous medium: The preliminary bearings were placed in the gaseous medium, a temperature was controlled at 850°C, and heat preservation was conducted for 15 h.
S52: Treatment with the liquid medium: Preliminary bearings treated with the gaseous medium were placed in the liquid medium, a temperature was controlled at 560°C, and heat preservation was conducted for 3 h.

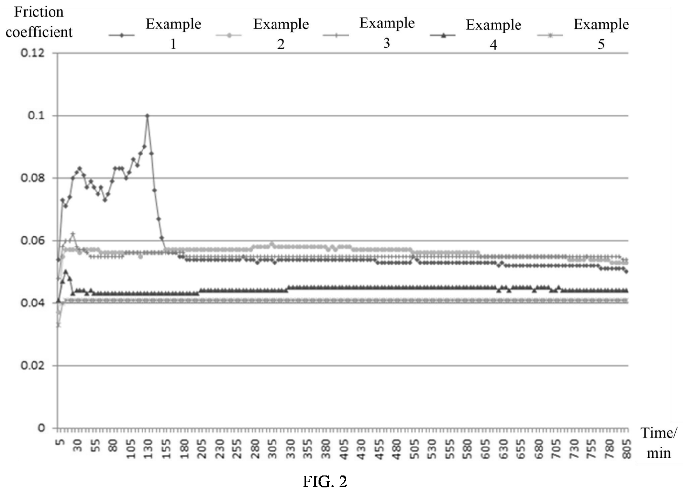

Performance test results of final products obtained in Examples 1 to 5 were shown in Table 2. FIG. 2 also shows the comparison of friction coefficients of high-strength wear-resistant bearings fabricated by different processes in Examples 1 to 5.

**Table 2 Test results for Examples 1 to 5**

| Parameter | Unit | Examples | | | | |
|---|---|---|---|---|---|---|
| | | 1 | 2 | 3 | 4 | 5 |
| Surface hardness | HV | 530 | 545 | 552 | 560 | 589 |
| Friction coefficient | / | 0.10 | 0.058 | 0.061 | 0.046 | 0.041 |
| Wear loss | mm | 0.034 | 0.025 | 0.027 | 0.022 | 0.016 |

Example 6: With reference to the parameters of Example 5, a temperature and a time of the controlled medium treatments were adjusted as follows:
S51: Treatment with the gaseous medium: The preliminary bearings were placed in the gaseous medium, a temperature was controlled at 800°C, and heat preservation was conducted for 20 h.
S52: Treatment with the liquid medium: Preliminary bearings treated with the gaseous medium were placed in the liquid medium, a temperature was controlled at 500°C, and heat preservation was conducted for 4 h.

Example 7: With reference to the parameters of Example 5, a temperature and a time of the controlled medium treatments were adjusted as follows:
S51: Treatment with the gaseous medium: The preliminary bearings were placed in the gaseous medium, a temperature was controlled at 900°C, and heat preservation was conducted for 10 h.
S52: Treatment with the liquid medium: Preliminary bearings treated with the gaseous medium were placed in the liquid medium, a temperature was controlled at 600°C, and heat preservation was conducted for 2 h.

Example 8: With reference to the parameters of Example 5, a temperature and a time of the controlled medium treatments were adjusted as follows:
S51: Treatment with the gaseous medium: The preliminary bearings were placed in the gaseous medium, a temperature was controlled at 830°C, and heat preservation was conducted for 10 h.
S52: Treatment with the liquid medium: Preliminary bearings treated with the gaseous medium were placed in the liquid medium, a temperature was controlled at 545°C, and heat preservation was conducted for 2 h.

Performance test results of final products obtained in Examples 6 to 8 were shown in Table 3.

**Table 3 Test results for Examples 6 to 8**

| Parameter | Unit | Examples | | |
|---|---|---|---|---|
| | | 6 | 7 | 8 |
| Surface hardness | HV | 568 | 602 | 576 |
| Friction coefficient | / | 0.049 | 0.046 | 0.048 |
| Wear loss | mm | 0.024 | 0.019 | 0.022 |

Example 9: With reference to the parameters of Example 5, the mass percentages of the components in the low-carbon alloy steel were adjusted as follows:
0.17% of C, 0.15% of Si, 0.55% of Mn, 0.030% of S, 0.030% of P, 0.30% of Cr, 0.45% of Ni, 0.02% of Cu, 0.15% of Mo, 0.04% of Ti, and a balance of Fe and unavoidable impurities.

Example 10: With reference to the parameters of Example 5, the mass percentages of the components in the low-carbon alloy steel were adjusted as follows:
0.23% of C, 0.37% of Si, 0.95% of Mn, 0.035% of S, 0.035% of P, 0.70% of Cr, 0.80% of Ni, 0.03% of Cu, 0.30% of Mo, 0.10% of Ti, and a balance of Fe and unavoidable impurities.

Performance test results of final products obtained in Examples 9 and 10 were shown in Table 4.

**Table 4 Test results for Examples 9 and 10**

| Parameter | Unit | Examples | |
|---|---|---|---|
| | | 9 | 10 |
| Surface hardness | HV | 577 | 613 |
| Friction coefficient | / | 0.048 | 0.047 |
| Wear loss | mm | 0.020 | 0.018 |

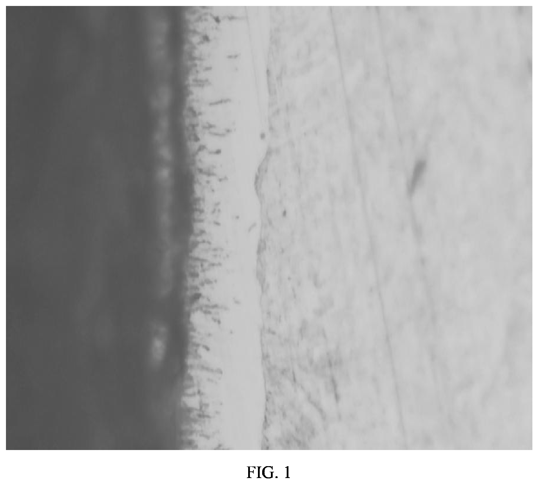

According to the comparison of test results of Example 1 with test results of Examples 2 to 10, by treating preliminary bearings with controlled media to enable the formation of a composite microstructure and controlling the composition systems and treatment processes of the gaseous and liquid media, a bearing product with high strength and high wear resistance can ultimately be produced. Through metal material modification techniques within controlled media, a composite microstructure is formed in the matrix of the product. A composition of the composite microstructure is S + C + Fe₂N + Fe₃N + Fe₄N + nanophase. FIG. 1 is an image of a microstructure of the high-strength wear-resistant bearing obtained in Example 5 of the present disclosure at a magnification of 500×. The composite microstructure, through gradient distribution, provides the product with high core strength, strong impact resistance, high surface hardness, and excellent wear resistance. The high-strength wear-resistant bearing has a service life of 500 h under low-speed, heavy-load bench test conditions and a friction coefficient of 0.05 or less throughout the life cycle.

The above are merely preferred embodiments of the present disclosure, and are not intended to limit the present disclosure. Any modifications, equivalent replacements, and improvements made within the spirit and principle of the present disclosure shall be all included in the scope of protection of the present disclosure.

## Claims

1. A fabrication method of a high-strength wear-resistant bearing, comprising following steps:
S1, fabrication of blanks with a raw material: designing products of different specifications according to a shape and a structure of a sliding bearing, and cutting or forging according to lengths of the products to produce the blanks, wherein the raw material is a low-carbon alloy steel;
S2, pre-hardening machining: pretreating the blanks, and adjusting shapes of the blanks according to dimensions of the sliding bearing, such that all dimensions other than an outer diameter and an inner diameter are machined to a finished state and the outer diameter and the inner diameter are machined to a semi-finished state;
S3, heat treatment: subjecting products obtained in the S2 to quenching at 850°C to 950°C and tempering at 650°C to 950°C to allow 100% sorbite (S) structure on a surface and a grain size grade of 5 or more;
S4, finish machining: conducting finish grinding in terms of the outer diameter and the inner diameter according to design requirements of the sliding bearing to achieve finished dimensions, so as to produce preliminary bearings; and
S5, treating with controlled media to form a composite microstructure, wherein the controlled media comprise a gaseous medium and a liquid medium, the gaseous medium comprises CO, H₂, and N₂, and the liquid medium comprises K₂CO₃, Na₂CO₃, NaCNO, Pr, and Nd.

2. The fabrication method of the high-strength wear-resistant bearing according to claim 1, wherein the gaseous medium comprises 15% to 20% of the CO, 40% to 45% of the H₂, and 35% to 45% of the N₂; and the liquid medium comprises 30% to 40% of the K₂CO₃, 42% to 50% of the Na₂CO₃, 17% to 28% of the NaCNO, a trace amount of the Pr, and a trace amount of the Nd.

3. The fabrication method of the high-strength wear-resistant bearing according to claim 2, wherein the gaseous medium comprises 18% of the CO, 42% of the H₂, and 40% of the N₂; and the liquid medium comprises 32% of the K₂CO₃, 48% of the Na₂CO₃, 19% of the NaCNO, a trace amount of the Pr, and a trace amount of the Nd.

4. The fabrication method of the high-strength wear-resistant bearing according to claim 2 or 3, wherein treating with controlled media to form the composite microstructure comprises following steps:
S51, treatment with the gaseous medium: placing the preliminary bearings in the gaseous medium, controlling a temperature at 800°C to 900°C, and conducting heat preservation for 10 h to 20 h; and
S52, treatment with the liquid medium: placing preliminary bearings treated with the gaseous medium in the liquid medium, controlling a temperature at 500°C to 600°C, and conducting heat preservation for 2 h to 4 h,
wherein a composite microstructure composition of the high-strength wear-resistant bearing is S + C + Fe₂N + Fe₃N + Fe₄N.

5. The fabrication method of the high-strength wear-resistant bearing according to claim 4, wherein in the S51, the temperature is 830°C to 850°C and the heat preservation is conducted for 15 h; and in the S52, the temperature is 545°C to 560°C and the heat preservation is conducted for 3 h.

6. The fabrication method of the high-strength wear-resistant bearing according to claim 1, wherein the low-carbon alloy steel comprises following components in mass percentages: 0.17% to 0.23% of C, 0.15% to 0.37% of Si, 0.55% to 0.95% of Mn, 0.035% or less of S, 0.035 or less of P, 0.30% to 0.70% of Cr, 0.45% to 0.80% of Ni, 0.03% or less of Cu, 0.15% to 0.30% of Mo, 0.04% to 0.10% of Ti, and a balance of Fe and unavoidable impurities.
